# EUROPEAN PATENT APPLICATION

(11) **EP 2 677 808 A1**
(43) Date of publication of application: **25.12.2013**
(21) Application number: 12760337.1
(22) Date of filing: 22.03.2012
(51) Int. Cl.: H04W 36/00

(54) **METHOD, ACCESS NETWORK CONTROL NODE, AND SYSTEM FOR SENDING AND RECEIVING LOAD INFORMATION**

(30) Priority: 22.03.2011 CN 201110069383
(71) Applicant: Huawei Technologies Co., Ltd., Shenzhen, Guangdong 518129 (CN)
(72) Inventor: ZHAO, Yang, Shenzhen Guangdong 518129 (CN); QIN, Jun, Shenzhen Guangdong 518129 (CN)
(74) Representative: Goddar, Heinz J.
(86) International application number: PCT/CN2012/072824
(87) International publication number: WO 2012/126388

(57) **Abstract**

The present invention discloses a method, an access network control node, and a system for receiving and sending load information, relating to the field of communications. According to the present invention, statistics about load data are separately provided based on sub-service types of CS and PS series of cell A, and load information is compiled by using the load data. The load information is sent to a second access network control node so that an access network control node of cell B closes cell B and/or performs an inter-cell handover for a UE. Therefore, network resources are properly used, thereby avoiding an incorrect cell closing and handover.

## Description

This application claims priority to Chinese Patent Application No. 201110069383.4, filed with the Chinese Patent Office on March 22, 2011 and entitled "METHOD, ACCESS NETWORK CONTROL NODE, AND SYSTEM FOR RECEIVING AND SENDING LOAD INFORMATION", which is incorporated herein by reference in its entirety.

### TECHNICAL FIELD

The present invention relates to the field of communications, and in particular to a method, an access network control node, and a system for receiving and sending load information.

### BACKGROUND

With the deterioration of global warming, energy conservation has been one of the goals of various carriers. Many energy-saving measures have been taken on communications networks to reduce the operating expense and protect the environment. For example, at the current stage, the GSM (Global System for Mobile communications, global system for mobile communications), the UTMS (Universal Mobile Telecommunications System, universal mobile telecommunications system), and the LTE (Long Term Evolution, long term evolution) communications networks coexist. A cell closing and handover are commonly performed according to the load status of a cell so as to properly assign network resources and conserve resources.

Generally, cells transmit their load information to each other, and an access network control node performs the operations of a cell closing and handover according to load information of a serving cell and a neighboring cell. However, at the current stage, access network control nodes of neighboring cells cannot exchange load information directly. They exchange the load information in an RIM (RAN Information Management, RAN information management) process or by using related information in a CS (Circuit Switched, circuit switched) handover process. In the RIM process, the load information of the serving cell is sent over a Gb interface to an access network control node of the neighboring cell through an SGSN (Serving GPRS Support Node, serving GPRS support node). In the related information in the CS handover process, the load information of the serving cell is sent over an A interface to the access network control node of the neighboring cell through an MSC (Mobile Switching Center, mobile switching center). In addition, when cells exchange load information, the load information only includes occupation of physical channel resources. When the load of a certain cell continues to be lower than a relatively low threshold, cells of a single mode or multiple modes may be closed. When the load is too heavy, the closed cells are enabled to share the load.

During implementation of the present invention, the inventor finds at least the following defects in the prior art:

Exchanged load information in current processes only includes occupation of physical resources in network resources of a serving cell. An access network control node cannot accurately determine a cell closing or handover according to received load information. This may result in an incorrect cell closing or handover, leading to improper use of network resources.

### SUMMARY

To solve the problems in the prior art, the present invention provides a method, an access network control node, and a system for receiving and sending load information. The technical solutions are described as follows:

A method for sending load information, including:
providing separately statistics about load data based on sub-service types of a CS service and/or sub-service types of a PS service of a serving cell, and compiling load information by using the load data; and
sending the load information to an access network control node of a neighboring cell so that the access network control node of the neighboring cell closes the neighboring cell and/or performs an inter-cell handover for a UE according to the load information.

Further, the providing separately statistics about load data based on sub-service types of a CS service and/or a PS service of a serving cell specifically includes:
determining whether a current service is a CS service or a PS service when an access network control node of the serving cell establishes a service channel with a mobile terminal;
when the current service is a CS service, receiving a service support indication sent by an MSC, acquiring sub-service types of the current service according to the service support indication, separately providing statistics about the channel occupancy rate of each sub-service type in the serving cell according to the sub-service types, and obtaining load data of each sub-service type in the serving cell; and
when the current service is a PS service, receiving a packet resource request sent by the mobile terminal, obtaining the sub-service types of the current service according to the packet resource request, separately providing statistics about the channel occupancy rate of each sub-service type in the serving cell according to the sub-service types, and obtaining load data of each sub-service type in the serving cell.

Further, the sending the load information to an access network control node of a neighboring cell specifically includes:
sending directly the load information to the access network control node of the neighboring cell through a communication channel between the access network control node of the serving cell and the access network control node of the neighboring cell.

Further, the method further includes:
receiving a load information query request sent by the access network control node of the neighboring cell and performing, according to the load information query request, the operation of the sending the load information to an access network control node of a neighboring cell.

A method for receiving load information, including:
providing separately statistics about load data based on sub-service types of a CS service and/or sub-service types of a PS service of a serving cell, and compiling first load information according to the load data;
receiving second load information sent by an access network control node of a neighboring cell, where the second load information consists of the statistics about load data separately provided by the access network control node of the neighboring cell based on the sub-service types of the CS service and/or the sub-service types of the PS service; and
closing the serving cell and/or performing an inter-cell handover for a UE according to the first load information and the second load information.

Further, the closing the serving cell according to the first load information and the second load information specifically includes the following steps:
Step A: Determine whether the overall load of the neighboring cell is lower than a preset first threshold; and if the overall load of the neighboring cell is not lower than the preset first threshold, perform step B, or if the overall load of the neighboring cell is lower than the preset first threshold, perform step C.
Step B: Determine whether the serving cell supports a heavy-load service in the neighboring cell; and if the serving cell supports the heavy-load service in the neighboring cell, maintain a channel for a heavy-load service in the serving cell, or if the serving cell does not support the heavy-load service in the neighboring cell, perform step C.
Step C: Determine whether the overall load of the serving cell is lower than a preset second threshold; and if the overall load of the serving cell is lower than the preset second threshold, perform step D, or if the overall load of the serving cell is not lower than the preset second threshold, the serving cell cannot be closed.
Step D: Determine whether the serving cell has a service that cannot be borne by the neighboring cell; and if the serving cell has the service that cannot be borne by the neighboring cell, perform step E, or if the serving cell does not have a service that cannot be borne by the neighboring cell, perform step F.
Step E: Maintain a channel for the service that cannot be borne by the neighboring cell in the serving cell.
Step F: Close the entire cell.

Further, when the serving cell receives the second load information sent by the neighboring cell, the method further includes:
determining whether the overall load of the neighboring cell is lower than the preset first threshold, where:
   if yes, the serving cell maintains in the enabled status; and
if no, it is determined whether the serving cell itself supports the heavy-load service in the neighboring cell; wherein:
   if yes, the channel for the heavy-load service in the neighboring cell in the serving cell is enabled; and
if no, the serving cell maintains in the enabled status.

Further, the performing an inter-cell handover for a UE according to the first load information and the second load information specifically includes:
determining whether the overall load of the serving cell is lower than a preset second threshold; and if yes, the inter-cell handover for the UE is terminated, or if no, a determining process of the inter-cell handover for the UE is enabled; where:
   the determining process of the inter-cell handover for the UE specifically includes: determining whether the overall load of the neighboring cell is lower than a preset first threshold, whether the neighboring cell supports a heavy-load service in the serving cell, and whether the load of the heavy-load service in the serving cell in the neighboring cell is lower than a preset third threshold; and
   if the overall load of the neighboring cell is lower than the preset first threshold, the neighboring cell supports the heavy-load service in the serving cell, and the load of the heavy-load service in the serving cell in the neighboring cell is lower than the preset third threshold, the neighboring cell is selected to perform the inter-cell handover for the UE; otherwise, next cell is selected as a neighboring cell to perform the determining process of the inter-cell handover for the UE.

An access network control node for sending load information, including:
a first statistics module, configured to separately provide statistics about load data based on sub-service types of a CS service and/or sub-service types of a PS service of a serving cell, and compile load information by using the load data; and
a sending module, configured to send the load information to an access network control node of a neighboring cell so that the access network control node of the neighboring cell closes the neighboring cell and/or performs an inter-cell handover for a UE according to the load information.

Further, the first statistics module specifically includes:
a service determining unit, configured to determine whether a current service is a CS or PS service when a service channel is established with a mobile terminal;
a first acquiring unit, configured to receive a service support indication sent by an MSC when the service determining unit determines that the current service is a CS service and acquire sub-service types of the current service according to the service support indication;
a second acquiring unit, configured to receive a packet resource request sent by the mobile terminal when the service determining unit determines that the current service is a PS service and obtain the sub-service types of the current service; and
a statistics unit, configured to separately provide statistics about the channel occupancy rate of each sub-service type in the serving cell according to the sub-service types obtained by the first acquiring unit and the second acquiring unit, and obtain load data of each sub-service type in the serving cell.

Further, the sending module is specifically configured to directly send the load information to the access network control node of the neighboring cell through a communication channel between an access network control node of the serving cell and the access network control node of the neighboring cell, so that the access network control node of the neighboring cell closes the neighboring cell and/or performs the inter-cell handover for the UE in the neighboring cell according to the load information.

Further, the access network control node further includes:
a request receiving module, configured to receive a load information query request sent by the access network control node of the neighboring cell and perform the operation of the sending the load information to an access network control node of a neighboring cell according to the load information query request.

An access network control node for receiving load information, including:
a second statistics module, configured to separately provide statistics about load data based on sub-service types of a CS service and/or sub-service types of a PS service of a serving cell, and compile first load information according to the load data;
a receiving module, configured to receive second load information sent by an access network control node of a neighboring cell, where the second load information consists of the statistics about load data separately provided by the access network control node of the neighboring cell based on the sub-service types of the CS service and/or the sub-service types of the PS service;
a controlling module, configured to close the serving cell according to the first load information and the second load information; and/or
perform an inter-cell handover for a UE according to the first load information and the second load information.

Further, the controlling module specifically includes:
a first determining unit, configured to determine whether the overall load of the neighboring cell is lower than a preset first threshold;
a second determining unit, configured to determine whether the serving cell supports a heavy-load service in the neighboring cell when the first determining unit determines that the overall load of the neighboring cell is not lower than the preset first threshold;
a third determining unit, configured to determine whether the overall load of the serving cell is lower than a preset second threshold when the first determining unit determines that the overall load of the neighboring cell is lower than the preset first threshold or the second determining unit determines that the serving cell does not support the heavy-load service in the neighboring cell;
a fourth determining unit, configured to determine whether the serving cell has a service that cannot be borne by the neighboring cell when the third determining unit determines that the overall load of the serving cell is lower than the preset second threshold;
a first closing unit, configured to maintain a channel for the service in the serving cell that cannot be borne by the neighboring cell when the fourth determining unit determines that the serving cell has the service that cannot be borne by the neighboring cell; and
a second closing unit, configured to close the entire cell when the fourth determining unit determines that the serving cell itself does not have a service that cannot be borne by the neighboring cell.

Further, the controlling module further includes:
a fifth determining unit, configured to determine whether the overall load of the neighboring cell is lower than the preset first threshold when the serving cell receives the second load information sent by the neighboring cell; and
a sixth determining unit, configured to determine whether the serving cell itself supports the heavy-load service in the neighboring cell when the fifth determining unit determines that the overall load of the neighboring cell is not lower than the preset first threshold; and if yes, in the serving cell, a channel that supports the heavy-load service in the neighboring cell is enabled, or if no, the serving cell maintains in the enabled status.

Further, the controlling module specifically includes:
a seventh determining unit, configured to determine whether the overall load of the serving cell is lower than a preset second threshold; and if yes, the inter-cell handover for the UE is terminated, or if no, a determining process of the inter-cell handover for the UE is enabled.

Accordingly, the controlling module further includes:
a handover determining module, configured to perform the determining process of the inter-cell handover for the UE: Specifically, the handover determining module determines whether the overall load of the neighboring cell is lower than a preset first threshold, whether the neighboring cell supports a heavy-load service in the serving cell, and whether the load of the heavy-load service in the serving cell in the neighboring cell is lower than the preset third threshold. If the overall load of the neighboring cell is lower than the preset first threshold, the neighboring cell supports the heavy-load service in the serving cell, and the load of the heavy-load service in the serving cell in the neighboring cell is lower than the preset third threshold, the neighboring cell is selected to perform the inter-cell handover for the UE; otherwise, next cell is selected as a neighboring cell to perform the determining process of the inter-cell handover for the UE.

A system for receiving and sending load information, including a first access network control node and a second access network control node, where:
the first access network control node is configured to separately provide statistics about load data based on sub-service types of a CS service and/or sub-service types of a PS service of a serving cell, compile second load information by using the load data, and send the second load information to the second access network control node; and
the second access network control node is configured to separately provide statistics about load data based on the sub-service types of the CS service and/or the sub-service types of the PS service of a serving cell, compile first load information according to the load data, receive the second load information sent by the first access network control node, and close the serving cell and/or perform an inter-cell handover for a UE according to the first load information and the second load information.

The beneficial effects yielded by the technical solutions of the embodiments of the present invention are described as follows: Statistics about load information of a cell are provided based on sub-service types of CS and PS services so that the load information is more accurate; accurate load information is transmitted among cells so that the cell accurately closes itself and/or performs an inter-cell handover for a UE according to the load information of the cell itself and other neighboring cells; and therefore, network resources are properly used, thereby avoiding an incorrect cell handover and closing.

### BRIEF DESCRIPTION OF DRAWINGS

FIG. 1 is a schematic flowchart of a method for sending load information according to Embodiment 1 of the present invention;
FIG. 2 is a schematic flowchart of a method for receiving load information according to Embodiment 1 of the present invention;
FIG. 3 is a schematic flowchart of a method for receiving and sending load information according to Embodiment 2 of the present invention;
FIG. 4 is a schematic flowchart of a method for closing a cell by a second access network control node based on its own load information and load information of cell A according to Embodiment 2 of the present invention;
FIG. 5 is a schematic flowchart of a method for performing an inter-cell handover for a UE by a second access network control node based on its own load information and load information of cell A according to Embodiment 2 of the present invention;
FIG. 6 is a structural schematic diagram of an access network control node for sending load information according to Embodiment 3 of the present invention;
FIG. 7 is a structural schematic diagram of a first statistics module in an access network control node for sending load information according to Embodiment 3 of the present invention;
FIG. 8 is a second structural schematic diagram of an access network control node for sending load information according to Embodiment 3 of the present invention;
FIG. 9 is a structural schematic diagram of an access network control node for receiving load information according to Embodiment 4 of the present invention;
FIG. 10 is a structural schematic diagram of a controlling module in an access network control node for receiving load information according to Embodiment 4 of the present invention;
FIG. 11 is a second structural schematic diagram of a controlling module in an access network control node for receiving load information according to Embodiment 4 of the present invention; and
FIG. 12 is a structural schematic flowchart of a system for receiving and sending load information according to Embodiment 5 of the present invention.

### DESCRIPTION OF EMBODIMENTS

To make the objectives, technical solutions, and advantages of the embodiments of the present invention more clearly, the following further describes the embodiments of the present invention in detail with reference to the accompanying drawings.

### Embodiment 1

This embodiment of the present invention provides a method for sending load information and a method for receiving load information.

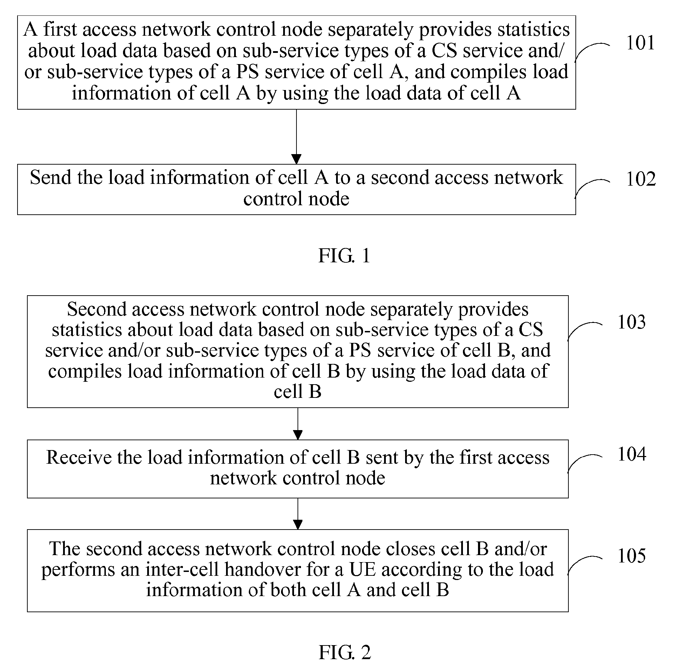

As shown in FIG. 1, a method for sending load information specifically includes:

101. A first access network control node separately provides statistics about load data based on sub-service types of a CS service and/or sub-service types of a PS service of cell A, and compiles load information of cell A by using the load data of cell A.

102. The first access network control node sends the load information of cell A to a second access network control node.

According to the method for sending load information provided by step 101 and step 102, a first access network control node provides statistics about load data based on sub-service types of a CS service and sub-service types of a PS service of cell A that is managed by the first access network control node, obtains load data of each sub-service type, and provides load data of all sub-service types as the load information of cell A for a second access network control node, so that the second access network control node closes cell B and/or performs an inter-cell handover for a UE according to the load information of cell A.

Further, before step 102, the method may further include:
receiving, by the first access network control node, a load information query request sent by the second access network control node.

Accordingly, as shown in FIG. 2, this embodiment provides a method for receiving load information, specifically including:

103. The second access network control node separately provides statistics about load data based on sub-service types of a CS service and/or sub-service types of a PS service of cell B, and compiles load information of cell B by using the load data of cell B.

104. The second access network control node receives the load information of cell B sent by the first access network control node.

It should be noted that, in this embodiment, the order between step 103 and 104 is not limited; and step 104 may be performed before step 103.

105. The second access network control node closes a serving cell and/or performs the inter-cell handover for the UE according to the load information of cell A and the load information of cell B.

It should be noted that, in step 101 and step 102 in this embodiment, the executor is the first access network control node, where the first access network control node is responsible for managing cell A; and in step 103 and step 104, the executor is the second access network control node, where the second access network control node is responsible for managing cell B, and cell A and cell B are neighboring cells. The first access network control node and the second access network control node may be two nodes or may be a same node. When the first access network control node and the second access network control node are the same node, sending load information from the first access network control node to the second access network control node is transmission of internal load information.

In this embodiment, the first access network control node and the second access network control node share a same method for providing statistics about load information of cells managed by them, and separately provide statistics about the load information of their cells based on the sub-service types of the CS service and the PS service. After the second access network control node obtains the load information of cell B and cell A, it may accurately determine the load status of each sub-service type in cell B and cell A, so that it closes a channel for a service with a low load in the serving cell and/or it hands over a UE to a neighboring cell for a service when the service type used by the UE in the serving cell occupies a channel with a heavy load.

According to a method for exchanging load information provided in this embodiment of the present invention, statistics about load information of a cell are provided based on sub-service types of CS and PS services, so that the load information is more accurate. In addition, the accurate load information is transmitted among cells. Therefore, the cell may accurately close itself and/or perform an inter-cell handover for a UE according to the load information of the cell and other neighboring cells so that network resources are properly used.

### Embodiment 2

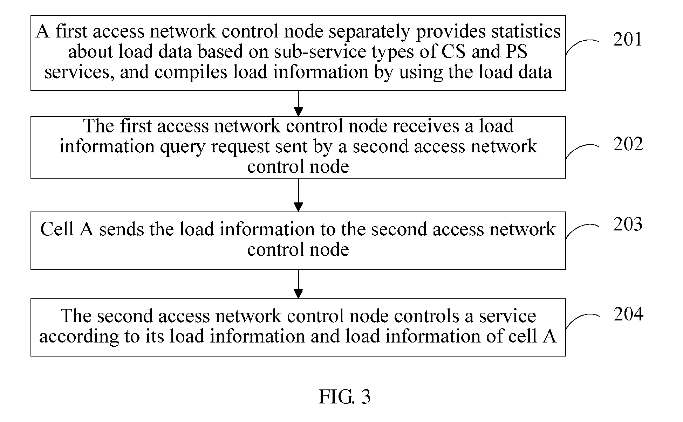

As shown in FIG. 3, this embodiment of the present invention provides a method for exchanging load information, which is improved based on Embodiment 1. In this embodiment, two cells are used as an example for description, including cell A and cell B. Cell B is a neighboring cell of cell A. The method for exchanging load information specifically includes:

201. A first access network control node provides statistics about load data based on sub-service types of CS and PS services of cell A, and compiles load information by using the load data.

It should be noted that, in this embodiment, the first access network control node specifically includes: a BSC (Base Station Controller, base station controller) and an RNC (Radio Network Controller, radio network controller), or an eNodeB (evolved Node B, evolved NodeB).

In this embodiment, the CS service stands for a circuit switched service and is mainly responsible for call services; and the PS service stands for a packet switched service and is mainly responsible for packet data services.

There exists a plurality of ways to obtain the sub-service types of the CS service and the sub-service types of the PS service. For example, in the CS domain, an access network control node may obtain a current sub-service type through an MSC; and in the PS domain, the access network control node may obtain the current sub-service type through an SGSN.

Specifically, the providing statistics about load data based on sub-service types of CS and PS services of cell A and compiling load information by using the load data specifically includes:

201-1. When establishing a service channel with a mobile terminal, the first access network control node first determines whether a current service is a CS service or a PS service; and if it is a CS service, perform step 201-2; if it is a PS service, perform step 201-3.

201-2: Receive a service support indication sent by the MSC (Mobile Switching Center, mobile switching center), acquire a sub-service type of the current service according to the service support indication, and perform step 201-4.

The service support indication (Service support indication) is specifically included in an assignment request message sent from the MSC to the access network control node. In this embodiment, as listed in Table 1, the assignment request message includes three fields, that is, an element identifier (Element identifier), length (Length), and a service support indication (Service support indication). The service support indication is a newly added field in the assignment request message.

**Table 1**

| 8 | 7 | 6 | 5 | 4 | 3 | 2 | 1 | |
|---|---|---|---|---|---|---|---|---|
| Element identifier | | | | | | | | octet 1 |
| Length | | | | | | | | octet 2 |
| Service support indication | | | | | | | | octet 3 |

The service support indication may be classified into the following three categories, including:

First, the service support indication may occupy one bit to indicate whether the mode of a network currently enabled supports the current service.

For example, bit 0 may be used to indicate that the mode of the network currently enabled supports the current service, and bit 1 may be used to indicate that the mode of the network currently enabled does not support the current service.

Second, the service support indication may occupy multiple bits to indicate network modes that support the current service.

For example, bit 00 may be used to indicate that all network modes support the current service, bit 01 may be used to indicate that only an LTE network supports the current service, bit 10 may be used to indicate that only a UMTS network supports the current service, and bit 11 may be used to indicate that both the UMTS network and the LTE network support the current service.

Accordingly, the acquiring a sub-service type of the current service according to the service support indication specifically includes:
obtaining, according to the service support indication, a network mode type that can be used by the current service, and assigning a sub-service type for the current service according to the network mode that can be used by the current service.

For example, when the network mode that can be used by the current service is that the GSM supports the current service but the LTE does not support the current service, and the current service is a CS service according to the determining in step 201, CS conversation may be assigned as the sub-service type of the current service.

Third, the service support indication may occupy multiple bits to indicate the sub-service type of the current service.

For example, bit 00 may be used to indicate that the sub-service type is CS conversation, and bit 01 is used to indicate the sub-service type is data/fax, and so on.

201-3. Receive a packet resource request sent by the mobile terminal, obtain the sub-service type of the current service according to the packet resource request, and perform step 201-4.

The packet resource request carries an indication used to indicate the sub-service type of the current service.

201-4. Provide statistics about the channel occupancy rate of the current service.

Further, there exists a plurality of ways to provide statistics about the channel occupancy rate of the current service. In this embodiment, traffic whose unit is Erl (Erlang) is exemplarily used to indicate the channel occupancy rate.

201-5. Provide statistics about the channel occupancy rate of each sub-service type in a serving cell according to sub-service types in a sub-service type indication, separately obtain load data of each sub-service type in the serving cell, and compile load information by using the load data.

It should be noted that the load information specifically includes a cell identity, a service type, load data of sub-service types of various service types, and the overall load data of a cell, specifically, as listed in Table 2:

**Table 2**

| **Cell ID (Cell Identity)** | **Service Type (Service Type)** | **Sub-service Type (Sub-service Type)** | **Load Information (Load information)** |
|---|---|---|---|
| Cell A | CS | CS conversation (CS conversation) | ... |
| Cell A | CS | Data/Fax (Data/Fax) | ... |
| Cell A | PS | Streaming (Streaming) | ... |
| Cell A | PS | Interacting (Interacting) | ... |
| Cell A | Whole | | ... |

There exists a plurality of ways to indicate load data of each service type or sub-service type. In this embodiment, traffic whose unit is Erl (Erlang) is exemplarily used to indicate the channel occupancy rate.

Step 202: The first access network control node receives a load information query request sent by a second access network control node.

It should be noted that the second access network control nodes specifically include a BSC and an RNC, or an eNodeB. However, cell A may not be the same as the second access network control node. For example, the first access network control node may be a BSC, and the second access network control node is an RNC. In this case, an exchange of load information can be performed.

Step 203: Cell A sends the load information to the second access network control node.

Further, step 202 and step 203 may be replaced with the following step: Cell A periodically sends load information to the second access network control node.

In this embodiment, when the first access network control node sends load information to the second access network control node, a communication channel is established between the first access network control mode and the second access network control node. For example, the load information may be sent through an Iur-g or X2 interface to the second access network control node. The Iur-g interface may be used between two RNCs, between two BSCs (Iu mode and A/Gb mode), and between an RNC and a BSC (Iu mode and A/Gb mode); and the X2 interface is used between two eNodeBs.

It should be noted that, in the prior art, a communications network consists of a terminal, an access network, and a core network. The access network control nodes of different cells belong to the access network, and the access network control nodes cannot exchange information directly. When the access network control nodes of different cells exchange load information, the information must be forwarded by the core network. For example, at the current stage, when the access network control nodes of different cells exchange load information directly, an exchange is performed in an RIM process or in related information in a CS handover process. In the RIM process, load information is forwarded over a Gb interface to an access network control node of a neighboring cell through the SGSN. In the related information in the CS handover process, load information is forwarded over an A interface to an access network control node of a neighboring cell through the MSC. In those cases, load information is forwarded to a neighboring cell. This occupies too many network resources. Network resources are saved by adopting the method for sending load information provided in this embodiment.

Step 204: The second access network control node controls a service according to its load information and the load information of cell A.

It should be noted that, in this embodiment, before step 204, it is included that the second access network control node provides statistics about its own load information.

Cell B and cell A share the same method for providing statistics about load information. Therefore, no further details are repeated herein.

In this embodiment, controlling, by the second access network control node, a service specifically includes closing the serving cell and performing an inter-cell handover for a UE in the serving cell.

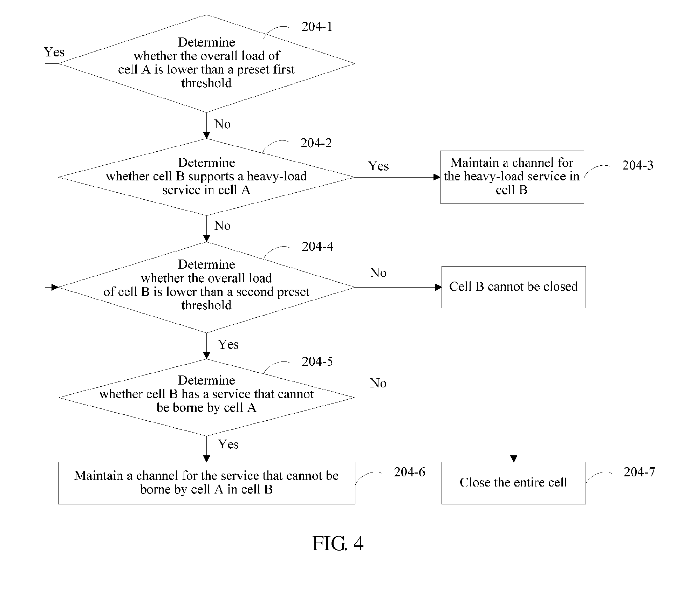

As shown in FIG. 4, the second access network control node closes a cell according to its own load information and the load information of cell A, specifically including:

204-1. The second access network control node determines whether the overall load of cell A is lower than a preset first threshold; and if yes, perform step 204-4, or if no, perform step 204-2.

The overall load includes both the CS service load and the PS service load.

204-2. The second access network control node determines whether cell B supports a heavy-load service in cell A; and if yes, perform step 204-3, or if no, perform step 204-4.

It should be noted that, in this embodiment, the service specifically refers to an operation performed by the UE and the current network. Several services may be grouped into one sub-service type, and several sub-service types may be categorized as the CS service or the PS service. Table 2 describes a method for categorizing services and sub-services.

204-3. Maintain a channel for the heavy-load service in cell B.

It should be noted that this step may further include closing a channel for other services and maintaining only the channel for the heavy-load service.

204-4. The second access network control node determines whether the overall load of cell B is lower than a preset second threshold; and if yes, perform step 204-5, or if no, cell B cannot be closed.

204-5. The second access network control node determines whether cell B has a service that cannot be borne by cell A; and if yes, perform step 204-6, or if no, perform step 204-7.

204-6. Maintain a channel for the service that cannot be borne by cell A in cell B.

204-7: Close the entire cell.

Further, when the second access network control node receives the load information sent by the first access network control node, the method further includes:
determining whether the overall load of cell A is lower than the preset first threshold, where:
   if yes, cell B maintains in the enabled status;
if no, the second access network control node determines whether cell B supports a heavy-load service in cell A; where:
   if yes, in cell B, a channel for the heavy-load service in cell A is enabled; and
   if no, cell B maintains in the enabled status.

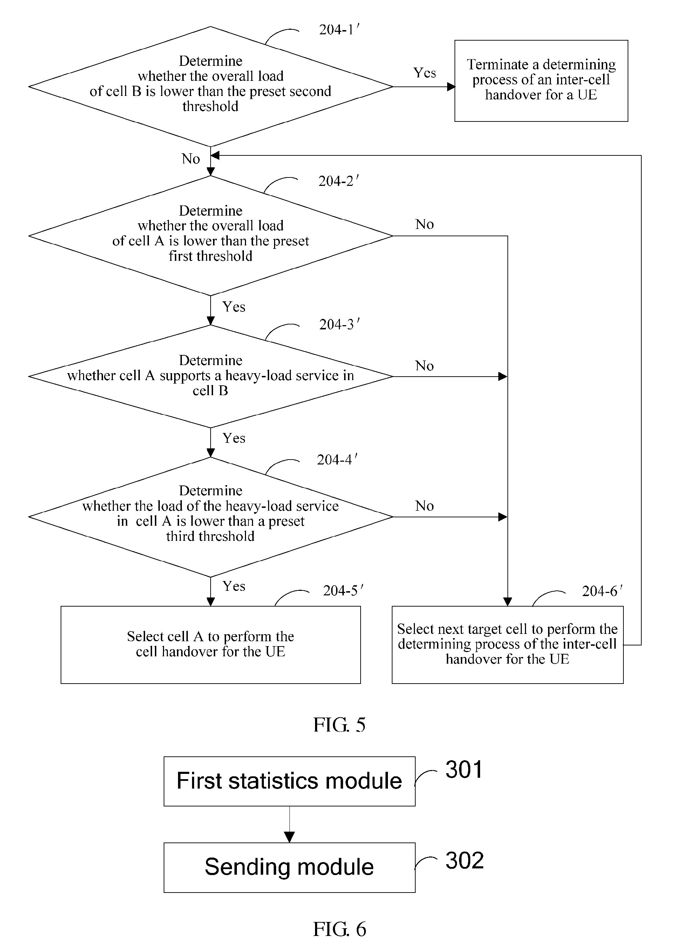

As shown in FIG. 5, the second access network control node performs the inter-cell handover for the UE according to the load information of cell B and cell A, specifically including:

204-1'. The second access network control node determines whether the overall load of cell B is lower than the preset second threshold: and if yes, terminate a determining process of the inter-cell handover for the UE, or if no, perform step 204-2'.

204-2'. The second access network control node starts a load-based handover determination and determines whether the overall load of cell A is lower than the preset first threshold; and if yes, perform step 204-3', or if no, perform step 204-6'.

204-3': Determine whether cell A supports a heavy-load service in cell B; and if yes, perform step 204-4', or if no, perform step 204-6'.

204-4'. Determine whether the load of the heavy-load service in cell A is lower than a preset third threshold; and if yes, perform step 204-5', or if no, perform step 204-6'.

204-5': Select cell A to perform the inter-cell handover.

In this step, the performing the inter-cell handover specifically is handing over the UE from cell B to cell A for a service, so that when the heavy-load service is implemented for a user, cell A provides the service to reduce the load of cell B.

It should be noted that, performing the inter-cell handover for the UE in the serving cell includes the handover between two neighboring cells of the same mode or between two neighboring cells of different modes.

204-6': Select next target cell to perform the determining process of the inter-cell handover for the UE.

In this step, the performing the determining process of the inter-cell handover for the next target cell is the same as the method in step 204-2' to step 204-6'.

It should be noted that, in this embodiment, the first access network control node is responsible for managing cell A, and the second access network control node is responsible for managing cell B. Cell A and cell B are neighboring cells. The first access network control node and the second access network control node may be two nodes or may be a same node. When the first access network control node and the second access network control node are the same node, sending load information from the first access network control node to the second access network control node is transmission of internal load information.

According to the method for exchanging load information provided in this embodiment of the present invention, statistics about load information of a cell are provided based on sub-service types of CS and PS services, so that the load information is more accurate. In addition, the accurate load information is transmitted among cells so that the cell accurately closes itself and/or performs an inter-cell handover for a UE according to load information of the cell and other neighboring cells. Therefore, network resources are properly used.

However, in the prior art, when cells exchange load information, only occupation of physical channel resources is included. Therefore, a specific sub-service type cannot be distinguished. For example, a certain cell may have a heavy CS service load but a low PS service load. For example, a heavy voice service load exists. An LTE cell cannot be responsible for a voice service so that the LTE cell is closed according to the method of the present invention. However, in the prior art, a specific service whose load is heavy cannot be distinguished, and it cannot be determined whether an LTE cell supports the service, making it impossible to close the LTE cell to save resources.

Therefore, according to the method for exchanging load information provided in the present invention, load information in a cell is more accurate. The cell is closed and an inter-cell handover for a UE in the cell is performed according to accurate load information. This makes full use of resources and avoids an incorrect cell handover or closing.

### Embodiment 3

As shown in FIG. 6, this embodiment of the present invention provides an access network control node for sending load information, including:
a first statistics module 301, configured to separately provide statistics about load data based on sub-service types of CS and/or PS services of a serving cell, and compile load information by using the load data; and
a sending module 302, configured to send the load information to an access network control node of a neighboring cell so that the access network control node of the neighboring cell closes a serving cell and/or performs an inter-cell handover for a UE according to the load information.

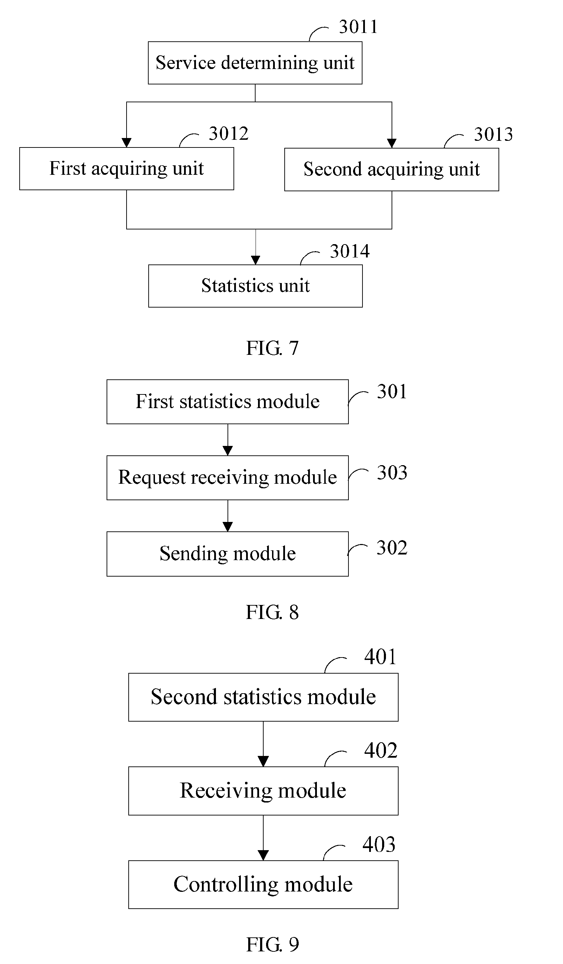

Further, as shown in FIG. 7, the first statistics module 301 specifically includes:
a service determining unit 3011, configured to determine whether a current service is a CS service or a PS service when a service channel with a mobile terminal is established;
a first acquiring unit 3012, configured to receive a service support indication sent by an MSC when the service determining unit 3011 determines that the current service is a CS service and acquire sub-service types of the current service according to the service support indication;
a second acquiring unit 3013, configured to receive a packet resource request sent by the mobile terminal when the service determining unit 3011 determines that the current service is a PS service and obtain the sub-service types of the current service according to the packet resource request; and
a statistics unit 3014, configured to separately provide statistics about the channel occupancy rate of each sub-service type in the serving cell according to the sub-service types obtained by the first acquiring unit 3012 and the second acquiring unit 3013, and obtain load data of each sub-service type in the serving cell.

Further, the sending module 302 is specifically configured to directly send the load information to the access network control node of the neighboring cell through a communication channel between an access network control node of the serving cell and the access network control node of the neighboring cell, so that the access network control node of the neighboring cell closes the neighboring cell and/or performs the inter-cell handover for the UE according to the load information.

Further, as shown in FIG. 8, the access network control node further includes:
a request receiving module 303, configured to receive a load information query request sent by the access network control node of the neighboring cell and perform the operation of the sending the load information to an access network control node of a neighboring cell according to the load information query request.

According to an exchanging apparatus for sending load information provided in Embodiment 3 of the present invention, statistics about load information of a serving cell are provided based on sub-service types of CS and PS services, so that the load information is more accurate. In addition, accurate load information is sent to an access network control node of a neighboring cell so that the access network control node of the neighboring cell accurately closes a neighboring cell and/or performs an inter-cell handover for a UE according to the load information. Therefore, network resources are properly used, thereby avoiding an incorrect cell handover and closing.

### Embodiment 4

As shown in FIG. 9, this embodiment of the present invention provides an access network control node for receiving load information, including:
a second statistics module 401, configured to separately provide statistics about load data based on sub-service types of a CS service and/or sub-service types of a PS service of a serving cell, and compile first load information according to the load data;
a receiving module 402, configured to receive second load information sent by an access network control node of a neighboring cell, where the second load information consists of the statistics about load data separately provided by the access network control node of the neighboring cell based on the sub-service types of the CS service and/or the sub-service types of the PS service;
a controlling module 403, configured to close the serving cell according to the first load information and the second load information; and/or
perform an inter-cell handover for a UE according to the first load information and the second load information.

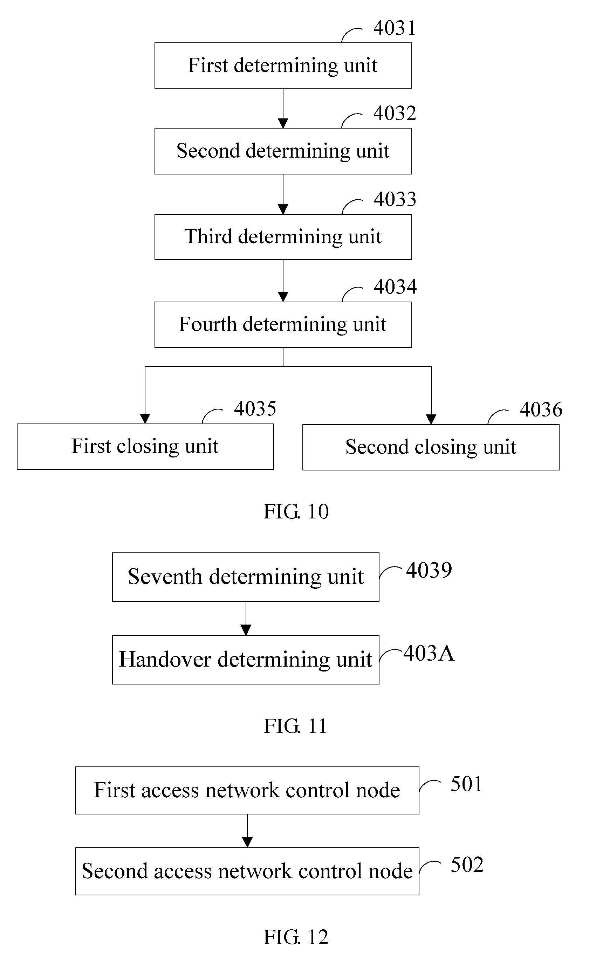

Further, as shown in FIG. 10, the controlling module 403 specifically includes:
a first determining unit 4031, configured to determine whether the overall load of the neighboring cell is lower than a preset first threshold;
a second determining unit 4032, configured to determine whether the serving cell supports a heavy-load service in the neighboring cell when the first determining unit 4031 determines that the overall load of the neighboring cell is not lower than the preset first threshold;
a third determining unit 4033, configured to determine whether the overall load of the serving cell is lower than a preset second threshold when the first determining unit 4031 determines that the overall load of the neighboring cell is lower than the preset first threshold or the second determining unit 4032 determines that the serving cell does not support the heavy-load service in the neighboring cell;
a fourth determining unit 4034, configured to determine whether the serving cell has a service that cannot be borne by the neighboring cell when the third determining unit 4033 determines that the overall load of the serving cell is lower than the preset second threshold;
a first closing unit 4035, configured to maintain a channel for the service in the serving cell that cannot be borne by the neighboring cell when the fourth determining unit 4034 determines that the serving cell has the service that cannot be borne by the neighboring cell; and
a second closing unit 4036, configured to close the entire cell when the fourth determining unit 4034 determines that the serving cell itself does not have a service that cannot be borne by the neighboring cell.

Further, the controlling module 403 further includes:
a fifth determining unit 4037, configured to determine whether the overall load of the neighboring cell is lower than the preset first threshold when the serving cell receives the second load information sent by the neighboring cell; and
a sixth determining unit 4038, configured to determine whether the serving cell itself supports the heavy-load service in the neighboring cell when the fifth determining unit 4037 determines that the overall load of the neighboring cell is not lower than the preset first threshold; and if yes, in the serving cell, a channel that supports the heavy-load service in the neighboring cell is enabled, or if no, the serving cell maintains in the enabled status.

Further, the controlling module 403 specifically includes:
a seventh determining unit 4039, configured to determine whether the overall load of the serving cell is lower than the preset second threshold; and if yes, the inter-cell handover for the UE is terminated, or if no, a determining process of the inter-cell handover for the UE is enabled; and
accordingly, as shown in FIG. 11, the controlling module 403 further includes:
a handover determining module 403A, configured to perform the determining process of the inter-cell handover for the UE: Specifically, the handover determining module determines whether the overall load of the neighboring cell is lower than the preset first threshold, whether the neighboring cell supports a heavy-load service in the serving cell, and whether the load of the heavy-load service in the serving cell in the neighboring cell is lower than the preset third threshold. If the overall load of the neighboring cell is lower than the preset first threshold, the neighboring cell supports the heavy-load service in the serving cell, and the load of the heavy-load service in the serving cell in the neighboring cell is lower than the preset third threshold, the neighboring cell is selected to perform the inter-cell handover for the UE; otherwise, next cell is selected as a neighboring cell to perform the determining process of the inter-cell handover for the UE.

According to the access network control node for receiving load information, first load information is obtained based on sub-service types of CS and/or PS services, and second load information obtained by an access network control node of a neighboring cell using a same method is received. A serving cell is closed and/or an inter-cell handover for a UE is performed according to first load information and the second load information. Therefore, network resources are properly used, thereby avoiding an incorrect cell handover and closing.

### Embodiment 5

As shown in FIG. 12, this embodiment provides a system for receiving and sending load information. The system includes a first access network control node 501 and a second access network control node 502, where:
the first access network control node 501 is configured to separately provide statistics about load data based on sub-service types of a CS service and/or sub-service types of a PS service of a serving cell, compile second load information by using the load data, and send the second load information to the second access network control node 502; and
the second access network control node 502 is configured to separately provide statistics about load data based on the sub-service types of the CS service and/or the sub-service types of the PS service of a serving cell, compile first load information according to the load data, receive the second load information sent by the first access network control node 501, and close the serving cell and/or perform an inter-cell handover for a UE in the serving cell according to the first load information and the second load information.

It should be noted that the first access network control node 501 and the second access network control node 502 are configured to manage different cells. In addition, the first access network control node 501 and the second access network control node may be two different access network control nodes or may be one same access network control node. When the first access network control node 501 and the second access network control node 502 are the same access network control node, sending load information from the first access network control node to the second access network control node is transmission of internal load information.

According to the system for receiving and sending load information provided in this embodiment of the present invention, a second access network control node provides statistics about load data based on sub-service types of CS and PS services of a serving cell and receives load information obtained by a neighboring cell using a same method. The serving cell is accurately closed and/or an inter-cell handover for a UE in the serving cell is performed. Therefore, network resources are properly used, thereby avoiding an incorrect cell handover and closing.

It should be noted that, the apparatus and system for receiving and sending load information according to Embodiment 3, Embodiment 4, and Embodiment 5 are only illustrated by division of the functional modules, and in an actual application, the functions may be distributed to different functional modules to be completed as required; that is, the internal structure of the apparatus and system for receiving and sending load information may be divided into different functional modules, so as to complete all or a part of functions described above. In addition, the apparatus and system for receiving and sending load information provided by the embodiments share a same concept with Embodiment 1 and Embodiment 2, and reference may be made to the method embodiment for the specific implementation process. Therefore, no further details are provided herein.

All or part of the contents in the technical solutions provided in the embodiments may be implemented by software programs, and the software programs are stored in readable storage media such as a computer hard disk, an optical disk, or a floppy disk.

The descriptions are merely exemplary embodiments of the present invention, but are not intended to limit the present invention. Any modification, equivalent replacement, or improvement derived within the spirit and principle of the present invention shall fall within the protection scope of the present invention.

## Claims

1. A method for sending load information, comprising:
providing separately statistics about load data based on sub-service types of a circuit switched CS service and/or sub-service types of a packet switched PS service of a serving cell, and compiling load information by using the load data; and
sending the load information to an access network control node of a neighboring cell so that the access network control node of the neighboring cell closes the neighboring cell and/or performs an inter-cell handover for a user equipment UE according to the load information.

2. The method according to claim 1, wherein the providing separately statistics about load data based on sub-service types of a circuit switched CS service and/or sub-service types of a packet switched PS service of a serving cell specifically comprises:
determining whether a current service is a CS service or a PS service when an access network control node of the serving cell establishes a service channel with a mobile terminal;
receiving a service support indication sent by a mobile switching center MSC when the current service is a CS service, obtaining sub-service types of the current service according to the service support indication, separately providing statistics about the channel occupancy rate of each sub-service type in the serving cell according to the sub-service types, and obtain load data of each sub-service type in the serving cell; and
receiving a packet resource request sent by the mobile terminal when the current service is a PS service, obtaining sub-service types of the current service according to the packet resource request, providing statistics about the channel occupancy rate of each sub-service type in the serving cell according to the sub-service types, and obtaining the load data of each sub-service type in the serving cell.

3. The method according to claim 1, wherein the sending the load information to an access network control node of a neighboring cell specifically comprises:
sending directly the load information to the access network control node of the neighboring cell through a communication channel between an access network control node of the serving cell and the access network control node of the neighboring cell.

4. The method according to claim 1, further comprising:
receiving a load information query request sent by the access network control node of the neighboring cell and performing, according to the load information query request, the operation of the sending the load information to an access network control node of a neighboring cell.

5. A method for receiving load information, comprising:
providing separately statistics about load data based on sub-service types of a CS service and/or sub-service types of a PS service of a serving cell, and compiling first load information according to the load data;
receiving second load information sent by an access network control node of a neighboring cell, wherein the second load information consists of the statistics about load data separately provided by the access network control node of the neighboring cell based on the sub-service types of the CS service and/or the sub-service types of the PS service; and
closing the serving cell and/or performing an inter-cell handover for a UE according to the first load information and the second load information.

6. The method according claim 5, wherein the closing the serving cell according to the first load information and the second load information specifically comprises the following steps:
Step A: Determine whether the overall load of the neighboring cell is lower than a preset first threshold; and if the overall load of the neighboring cell is not lower than the preset first threshold, perform step B, or if the overall load of the neighboring cell is lower than the preset first threshold, perform step C;
step B: Determine whether the serving cell supports a heavy-load service in the neighboring cell; and if the serving cell supports the heavy-load service in the neighboring cell, maintain a channel for the heavy-load service in the serving cell, or if the serving cell does not support the heavy-load service in the neighboring cell, perform step C;
step C: Determine whether the overall load of the serving cell is lower than a preset second threshold; and if the overall load of the serving cell is lower than the preset second threshold, perform step D, or if the overall load of the serving cell is not lower than the preset second threshold, the serving cell cannot be closed;
step D: Determine whether the serving cell has a service that cannot be borne by the neighboring cell; and if the serving cell has the service that cannot be borne by the neighboring cell, perform step E, or if the serving cell does not have a service that cannot be borne by the neighboring cell, perform step F;
step E: Maintain a channel for the service that cannot be borne by the neighboring cell in the serving cell; and
step F: Close the entire cell.

7. The method according to claim 6, when the serving cell receives the second load information sent by the neighboring cell, further comprising
determining whether the overall load of the neighboring cell is lower than the preset first threshold, wherein:
if yes, the serving cell maintains in the enabled status; and
if no, it is determined whether the serving cell itself supports the heavy-load service in the neighboring cell; wherein:
if yes, the channel for the heavy-load service in the neighboring cell in the serving cell is enabled; and
if no, the serving cell maintains in the enabled status.

8. The method according to claim 5, wherein the performing an inter-cell handover for a UE according to the first load information and the second load information specifically comprises:
determining whether the overall load of the serving cell is lower than a preset second threshold; and if yes, the inter-cell handover for the UE is terminated, or if no, a determining process of the inter-cell handover for the UE is enabled; wherein:
the determining process of the inter-cell handover for the UE specifically comprises: determining whether the overall load of the neighboring cell is lower than a preset first threshold, whether the neighboring cell supports a heavy-load service in the serving cell, and whether the load of the heavy-load service in the serving cell in the neighboring cell is lower than a preset third threshold; and
if the overall load of the neighboring cell is lower than the preset first threshold, the neighboring cell supports the heavy-load service in the serving cell, and the load of the heavy-load service in the serving cell in the neighboring cell is lower than the preset third threshold, the neighboring cell is selected to perform the inter-cell handover for the UE; otherwise, next cell is selected as a neighboring cell to perform the determining process of the inter-cell handover for the UE.

9. An access network control node for sending load information, comprising:
a first statistics module, configured to separately provide statistics about load data based on sub-service types of a CS service and/or sub-service types of a PS service of a serving cell, and compile load information by using the load data; and
a sending module, configured to send the load information to an access network control node of a neighboring cell so that the access network control node of the neighboring cell closes the neighboring cell and/or performs an inter-cell handover for a UE according to the load information.

10. The access network control node according to claim 9, wherein the first statistics module specifically comprises:
a service determining unit, configured to determine whether a current service is a CS service or a PS service when a service channel with a mobile terminal is established;
a first acquiring unit, configured to receive a service support indication sent by an MSC when the service determining unit determines that the current service is a CS service and acquire sub-service types of the current service according to the service support indication;
a second acquiring unit, configured to receive a packet resource request sent by the mobile terminal when the service determining unit determines that the current service is a PS service and obtain the sub-service types of the current service according to the packet resource request; and
a statistics unit, configured to separately provide statistics about the channel occupancy rate of each sub-service type in the serving cell according to the sub-service types obtained by the first acquiring unit and the second acquiring unit, and obtain load data of each sub-service type in the serving cell.

11. The access network control node according to claim 9, wherein the sending module is specifically configured to send the load information directly to the access network control node of the neighboring cell through a channel between an access network control node of the serving cell and the access network control node of the neighboring cell, so that the access network control node of the neighboring cell closes the neighboring cell and/or performs the inter-cell handover for the UE according to the load information.

12. The access network control node according to claim 9, further comprising:
a request receiving module, configured to receive a load information query request sent by the access network control node of the neighboring cell and perform, according to the load information query request, the operation of the sending the load information to an access network control node of a neighboring cell.

13. An access network control node for receiving load information, comprising:
a second statistics module, configured to separately provide statistics about load data based on sub-service types of a CS service and/or sub-service types of a PS service of a serving cell, and compile first load information according to the load data;
a receiving module, configured to receive second load information sent by an access network control node of a neighboring cell, wherein the second load information consists of the statistics about load data separately provided by the access network control node of the neighboring cell based on the sub-service types of the CS service and/or the sub-service types of the PS service;
a controlling module, configured to close the serving cell according to the first load information and the second load information; and/or
perform an inter-cell handover for a UE according to the first load information and the second load information.

14. The access network control node according to claim 13, wherein the controlling module further comprises:
a first determining unit, configured to determine whether the overall load of the neighboring cell is lower than a preset first threshold;
a second determining unit, configured to determine whether the serving cell supports a heavy-load service in the neighboring cell when the first determining unit determines that the overall load of the neighboring cell is not lower than the preset first threshold;
a third determining unit, configured to determine whether the overall load of the serving cell is lower than a preset second threshold when the first determining unit determines that the overall load of the neighboring cell is lower than the preset first threshold or the second determining unit determines that the serving cell does not support the heavy-load service in the neighboring cell;
a fourth determining unit, configured to determine whether the serving cell has a service that cannot be borne by the neighboring cell when the third determining unit determines that the overall load of the serving cell is lower than the preset second threshold;
a first closing unit, configured to maintain a channel for the service in the serving cell that cannot be borne by the neighboring cell when the fourth determining unit determines that the serving cell has the service that cannot be borne by the neighboring cell; and
a second closing unit, configured to close the entire cell when the fourth determining unit determines that the serving cell itself does not have a service that cannot be borne by the neighboring cell.

15. The access network control node according to claim 14, wherein the controlling module further comprises:
a fifth determining unit, configured to determine whether the overall load of the neighboring cell is lower than the preset first threshold when the serving cell receives the second load information sent by the neighboring cell; and
a sixth determining unit, configured to determine whether the serving cell itself supports the heavy-load service in the neighboring cell when the fifth determining unit determines that the overall load of the neighboring cell is not lower than the preset first threshold; and if yes, in the serving cell, a channel that supports the heavy-load service in the neighboring cell is enabled, or if no, the serving cell maintains in the enabled status.

16. The access network control node according to claim 13, wherein the controlling module specifically comprises:
a seventh determining unit, configured to determine whether the overall load of the serving cell is lower than a preset second threshold; and if yes, the inter-cell handover for the UE is terminated, or if no, a determining process of the inter-cell handover for the UE is enabled; and
accordingly, the controlling module further comprises:
a handover determining module, configured to perform the determining process of the inter-cell handover for the UE: Specifically, the handover determining module determines whether the overall load of the neighboring cell is lower than a preset first threshold, whether the neighboring cell supports a heavy-load service in the serving cell, and whether the load of the heavy-load service in the serving cell in the neighboring cell is lower than a preset third threshold; and if the overall load of the neighboring cell is lower than the preset first threshold, the neighboring cell supports the heavy-load service, and the load of the heavy-load service in the serving cell in the neighboring cell is lower than the preset third threshold, the neighboring cell is selected to perform the inter-cell handover for the UE; otherwise, next cell is selected as a neighboring cell to perform the determining process of the inter-cell handover for the UE.

17. A system for receiving and sending load information, comprising a first access network control node and a second access network control node, wherein:
the first access network control node is configured to separately provide statistics about load data based on sub-service types of a CS service and/or sub-service types of a PS service of a serving cell, compile second load information by using the load data, and send the second load information to the second access network control node; and
the second access network control node is configured to separately provide statistics about load data based on the sub-service types of the CS service and/or the sub-service types of the PS service of a serving cell, compile first load information according to the load data, receive the second load information sent by the first access network control node, and close the serving cell and/or perform an inter-cell handover for a UE according to the first load information and the second load information.
